(19)

Europäisches
Patentamt

European
Patent Office

Office européen
des brevets

(11) **EP 4 484 369 A1**

(12) **EUROPEAN PATENT APPLICATION**

(43) Date of publication:
**01.01.2025 Bulletin 2025/01**

(21) Application number: **23181832.9**

(22) Date of filing: **27.06.2023**

(51) International Patent Classification (IPC):
*C01B 32/05* (2017.01)   *B01J 13/00* (2006.01)
*C04B 35/524* (2006.01)   *C08G 8/20* (2006.01)
*C08G 8/22* (2006.01)   *C08G 12/06* (2006.01)

(52) Cooperative Patent Classification (CPC):
**C01B 32/05; B01J 13/0091; C04B 35/524;
C08G 8/20; C08G 8/22; C08G 12/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Studiengesellschaft Kohle gGmbH
45470 Mülheim (DE)**

(72) Inventors:
• **SCHMIDT, Wolfgang
45470 Mülheim an der Ruhr (DE)**
• **BILICAN, Abdurrahman
45468 Mülheim an der Ruhr (DE)**

(54) **PROCESS FOR PREPARING CARBON XEROGELS**

(57)   The present invention refers to an efficient process for preparing a carbon xerogel.

Figure 1

Processed by Luminess, 75001 PARIS (FR)

EP 4 484 369 A1

**Description**

The present invention refers to an efficient process for preparing a carbon xerogel.

Carbon Xerogels are porous carbon materials that lately found application in numerous fields, which are decisive for the ecological transformation of the global economy. The possess very high specific surface areas (SSA), high pore volumes and adjustable pore sizes with pore diameters in the micropore (< 2nm) and mesopore (2-50 nm) range. Their potential use was shown for electrochemical applications in fuel cells, supercapacitors or batteries, and for thermal insulation materials, catalyst supports, and adsorption materials.

The high interest in these materials lies in the overall possibility to tune material properties of meso- and microporous carbon for individual applications. The synthesis of resorcinol and formaldehyde to an organic RF gel, as proposed by Pekala (Pekala et al., Journal of Materials Science, 1989, 24(9), 3221-3227), provides an opportunity to tailor the pore and particle sizes of a porous polymer by the variation of pH and dilution of the reaction solution. Such porous polymers can be further converted to conductive and high surface area carbon aerogels (CA) or carbon xerogels (CX) via pyrolysis.

Previous work shows that the sol-gel reaction proceeds either under acidic or basic conditions. Rey-Raap et al. (Rey-Raap et al., Microporous and Mesoporous Materials, 2014, 195, 266-275) showed that the porous properties of RF gels can be controlled by adjusting the pH and educt concentration of the reaction solution. It was shown that different synthesis parameters result in different specific surface areas, pore volumes, and pore size distributions.

Since CA and CX are derived from organic polymeric gels with high porosity through a wet-chemical sol-gel process, the solvent is still present in the pores after solidification of the sol in a gel. Thermal removal of the liquid phase causes high tension at the interface of the liquid and solid phase (capillary forces). The strong tension can result in collapse of the pore structure of the gel. In order to prevent shrinkage of the material and collapse of the pores, supercritical drying with $CO_2$ or cryo-drying is often used to avoid the tension at the liquid-solid interface. Such processes are rather slow and the synthesis of respective carbon materials, denoted as CA, is very time-intensive.

Even though CA are among the materials with highest known pore volumes and specific surface area, their broad application is restricted by their time- and labour-intensive synthesis. An alternative to CA are CX, where the organic precursor material is dried at ambient conditions. Even though significant parts of the porous properties of the gels can be deteriorated by the ambient drying method, CX still possess extraordinary porous properties and are thus promising material for several applications. Furthermore, the reduction of pore sizes upon drying can be counterbalanced by the adjustment of the synthesis parameters. The loss of porosity can be reduced by the use of additives or pore size modifiers.

CX present a greater potential for commercial application than their supercitically dried counterparts, because of their simplified synthesis protocols. Nonetheless, the commercial use of CX is still challenged by following problems:

1. High cost of monomers of the organic polymer
2. Still quire long synthesis times
3. Cost and energy intensive processes (Gelation, Curing, Drying, Carbonisation)

Replacement of resorcinol by different phenolic compounds proved problematic as the different phenolic substituents were less reactive than resorcinol. Phenol shows a 15 times lower reactivity than resorcinol. Consequently, a stronger basic catalyst is needed for the reaction with formaldehyde.

Scherdel et al. (Scherdel et al., Journal of Porous Materials, 2012, 19(3), 351-360) report a synthesis route for CX from phenol-formaldehyde gels by using NaOH as a basic catalyst for the synthesis of the organic gels. Due to the high amount of NaOH used in the synthesis, a washing process was required for removal of the base from the gel. Sustainable and nature-derived substituents like tannins (Szczurek et al., Carbon, 2011, 49(8), 2773-2784) and lignins (Grishechko et al., Microporous and Mesoporous Materials, 2013, 168, 19-29) were also tested and the tailoring of these materials similar to resorcinol-based systems was shown.

Wiener et al. (Wiener et al., Journal of Non-Crystalline Solids, 2004, 350, 126-130) accelerated the synthesis of RF-gels with resorcinol to base catalyst ratios (RC values) between 1000 and 3000 down from several days to 24 h by heating the sol directly to 90°C. Slightly smaller particles were obtained by the faster synthesis which could be counterbalanced by adjustment of the RC value. Alternatively, a hydrothermal sol-gel synthesis of resorcinol-formaldehyde gels at elevated temperatures allows for synthesis times for the RF- gel of several hours. Cho et al (Cho et al., RSC Advances 2018, 8(38), 21326-21331) show that RF-gels can be obtained after a hydrothermal synthesis at 100°C for 6h which showed an SSA of 650 $m^2 \cdot g^{-1}$.

Further approaches to facilitate the carbon xerogel synthesis addressed the ambient drying process. A solvent exchange of the aqueous solution with a solvent with a lower surface tension is one way to reduce the capillary forces within the pores and shrinkage of the organic gel during ambient drying. Slow heating of the RF-gel at slightly elevated temperatures is also an option for removing the aqueous phase. Lin et al. (Lin et al., Carbon 1997, 35 (9), 1271-1278) showed that organic gels can be dried in a tube furnace under $N_2$ flow first for 5 h at 65°C and then for 5 h at 110°C without high losses of porosity.

Léonard et al. (Léonard et al., Carbon, 2005, 43(8), 1808-1811) dried organic gels without preliminary treatment after synthesis and showed that RF-derived carbon xerogels can be produced with SSA of 630 m$^2$·g$^{-1}$ and V$_{pore}$ up to 1.25 cm$^3$·g$^{-1}$ where convective drying methods was included in the production process. US2012020869A1 describes a process for the production of carbon xerogels from phenol-formaldehyde gels, which were dried convectively without exchange of solvent between 0°C and 200°C.

Synthesis optimizations of convective air-drying of organic xerogels showed that at 70°C and an applying an air velocity of 2 m·s$^{-1}$, 90% of the solvent evaporated after 1h. The time for the remaining solvent to leave the pores depends on the pore size but no case exceeded 8h (Job et al. Journal of Non-Crystalline Solids, 2006, 352(1), 24-34). Using microwaves led to even faster drying of the wet gels within 30 min. The microwave technique was then used to additionally accelerate the gelation and ageing of the organic gel.

*Calvo et al. (*Calvo et al., Journal of Colloid and Interface Science, 2011, 357(2), 541-547) showed that organic gels can be synthesized within 5 h. The resulting RF-gels were comparable to those synthesized with conventional heating methods lasting over several days. The microwave synthesis was optimized and the overall synthesis time (gelation, ageing and drying) of the RF-gels was cut down to 3 h.

CN113860284A reports a method for preparing carbon xerogels where microcrystalline carbon nanomaterials are dispersed as additives in a solution of phenol, formaldehyde, water, and catalyst and then heated to 40-120°C for 3-12 hours and finally dried at 80 - 100°C for 1-2 h. The resulting gel is heated to 800-1000°C for 1-3 hours. The overall procedure then takes 5 - 15h.

To cut down cost and synthesis time, major contributions were already made by these findings. Still, reducing the synthesis time and simplifying the whole process is still highly desirable for profitable and highly reproducible large-scale production. Thus, there is the need for an improved process for preparing carbon xerogels.

The present inventors have developed a process where conventional heating methods can be applied to produce carbon xerogels with SSAs of 600-700 m$^2$·g$^{-1}$ and pore volumes of 0.6 to 1.7 cm$^3$·g$^{-1}$ within 5 h basically without using any other substances than described in the original synthesis of *Pekala* (US4873218A) or without any additional steps after the gelation of the RF-xerogel. According to the inventors, the emphasis of the invention lies on the more time-efficient preparation of the RF-gel at temperatures of 80-120°C and the omission of the drying step. After optional crushing, the as made RF-gel may be directly heated to 1000 °C with a heating rate of 10 K/min.

Thus, the present invention is directed to a process for the preparing a carbon xerogel, said process comprising the steps of:

a) mixing a nucleophilic compound, selected from melamin, melam, melem, ammeline, 4,6-amino-dihydroxy-1,3,5-triazine, aminophenol, diaminobenzene, preferably a mono- or polyhydroxy benzene and any combination thereof, and formaldehyde or an oligomer thereof in a molar ratio of 0.1 to 1, preferably of 1 : (1.5 to 2.5), more preferably of 1 : (1.8 to 2.2) in a solvent, being selected from water, a polar organic solvent, preferably a C$_1$- to C$_3$- aliphatic alcohol, or a mixture thereof in the presence of a catalyst which may be an acidic or basic catalyst in a mass fraction of the mass of the nucleophilic compound and formaldehyde to the overall mass of the reaction solution in the range of 1 to 60 % b.w., preferably in the range of 20 to 50% b.w.,

b) heating the mixture obtained in step a) in a sealed container to a temperature in the range of 50°C to a temperature below carbonization start such as 300°C or 250°C, preferably 80°C to 160°C for a period of time in the range of 30 minutes to 24 hours whereby a stable gel is formed,

c) heating the gel obtained in step b) for direct carbonization to a temperature range of 500°C to 3000°C in an oxygen-free atmosphere with a heating rate of 0.1 to 100 °K/min, preferably 5 to 10 K/min, keeping the gel in said temperature range and atmosphere for a period of time in the range of 10 minutes to 2 hours, and

d) bringing the product obtained in step c) to ambient temperature.

The inventors have found out that the obtained gel which is formed by a condensation reaction between the nucleophilic group and the formaldehyde can be directly introduced into the carbonisation process without the need of drying the gel or solvent-exchanging the solvent in the pores of the gel. Thus, the process leads to faster production times compared to the processes of the prior art.

In the inventive process, the nucleophilic compound, selected from melamin, melam, melem, ammeline, 4,6-amino-dihydroxy-1,3,5-triazine, aminophenol, diaminobenzene, preferably a mono- or polyhydroxy benzene, and any combination thereof is reacted with formaldehyde or an oligomer thereof in a stoichiometric excess to the nucleophilc compound which allows a substantially complete polymerisation/condensation of nucleophilic compound with formaldehyde to a polycondensed network.

Preferably, a mono- or polyhydroxy benzene is used as nucleophilic compound and particularly, the polyhydroxy benzene is a dihydroxy benzene. Said dihydroxy benzene may be selected from the group consisting of resorcinol, catechol, substituted resorcinol, substituted catechol and mixtures thereof, and preferably, said dihydroxy benzene is resorcinol or a mixture of resorcinol and catechol. The molar ratio of said mono- or polyhydroxy benzene to said formaldehyde may preferably be about 1:2.

In the inventive process, the polyhydroxy benzene to catalyst ratio is in the range of 0.001 and 1.000.

<u>In an embodiment of the invention,</u> a nonpolar organic solvent is added to the solvent in step a) and the obtained mixture is preferably vigorously stirred for forming an emulsion. By forming the emulsion, a more dedicated network of mesopores can be formed in the polycondensation step and a more rigid structure can be obtained during the carbonization

The sealed container in step b) is preferably an autoclave which is optionally pressurized to 1 to 100 bar.

Usually, the gel obtained in step b) is obtained ine the form of a block and can be crushed to a particulate powder-like material before the material is introduced into the carbonization vessel before step c)

As a key point of the invention, the gel obtained in step b) is directly transferred, in a "wet" state, from the preparation container to a carbonization vessel without any further pre-treatment such as drying and/or solvent exchange. A washing step might be applied in order to reduce the salt load of the gel.

The carbonization step is carried out under an inert atmosphere which may not contain any oxygen to prevent degradation of the network structure. Said oxygen-free atmosphere in step c) may be a nitrogen atmosphere.

The catalyst used in the inventive process may be an acidic or a basic catalyst. In one embodiment, said catalyst is sodium carbonate.

The present invention is further illustrated by the attached Figures and following Examples. In the attachment, the Figures show:

Figure 1: $N_2$ sorption isotherm of samples BIA-BA-127-01, 128-01 and 129-01

Figure 2: Rouquerol plot of samples BIA-BA-127-01, 128-01 and 129-01

Figure 3: BET plot of samples BIA-BA-127-01, 128-01 and 129-01.

Figure 4: t-plot of samples BIA-BA-127-01, 128-01 and 129-01.

Figure 5: BJH plot (desorption) of samples BIA-BA-127-01, 128-01 and 129-01.

Figure 6: $N_2$ sorption isotherms of samples BIA-BA-130-01, 131-01 and 132-01.

Figure 7: Rouquerol plot of samples BIA-BA-130-01, 131-01 and 132-01.

Figure 8: BET plot of samples BIA-BA-130-01, 131-01 and 132-01.

Figure 9: t-plot of samples BIA-BA-130-01, 131-01 and 132-01.

Figure 10: BJH plot (desorption) of samples BIA-BA-130-01, 131-01 and 132-01.

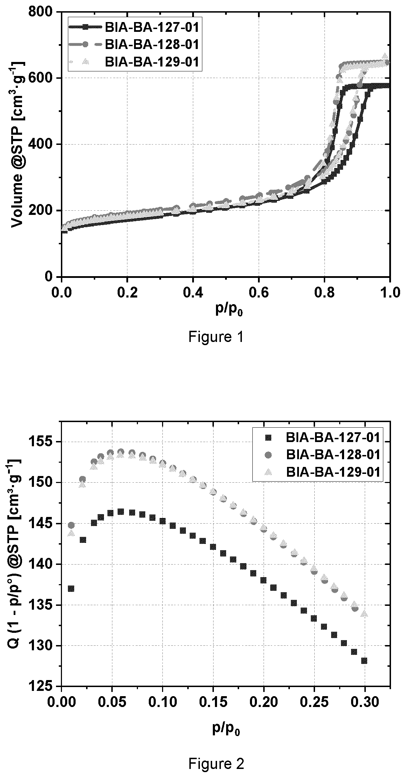

Figure 1: $N_2$ sorption isotherms of samples BIA-BA-146-01 and 146-03.

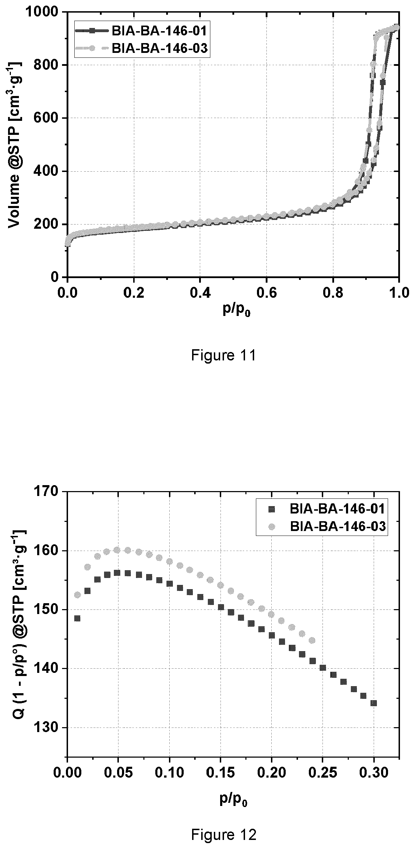

Figure 12: Rouquerol plot of samples BIA-BA-146-01 and 146-03.

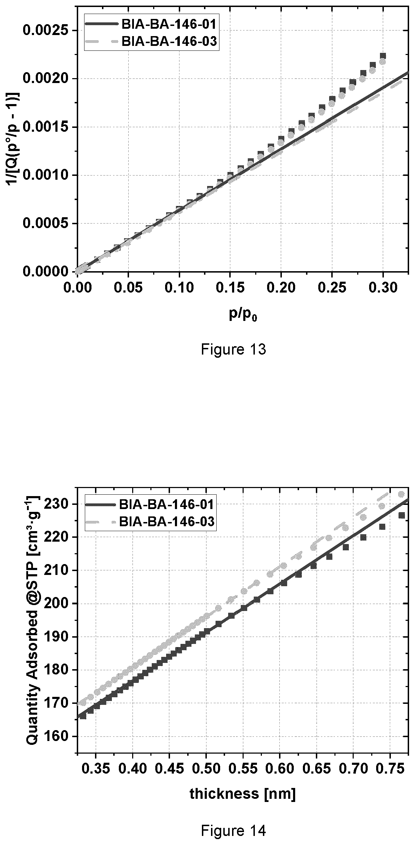

Figure 13: BET plot of samples BIA-BA-146-01 and 146-03.

Figure 14: t-plot of samples BIA-BA-146-01 and 146-03.

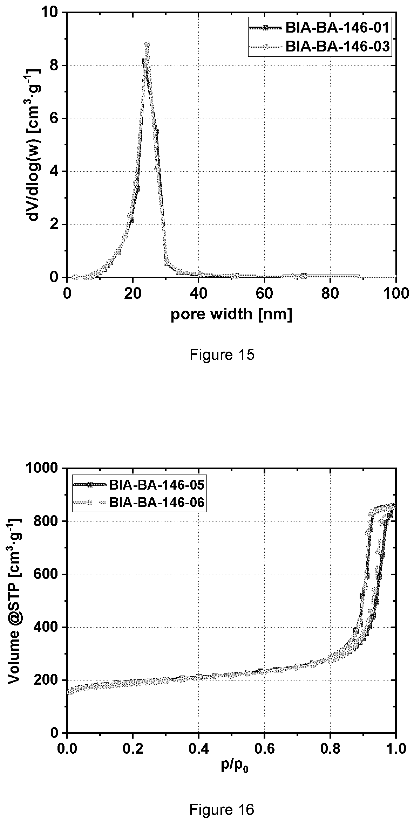

Figure 15: BJH plot (desorption) of samples BIA-BA-146-01 and 146-03.

Figure 16: $N_2$ sorption isotherm of samples BIA-BA-146-05 and 146-06.

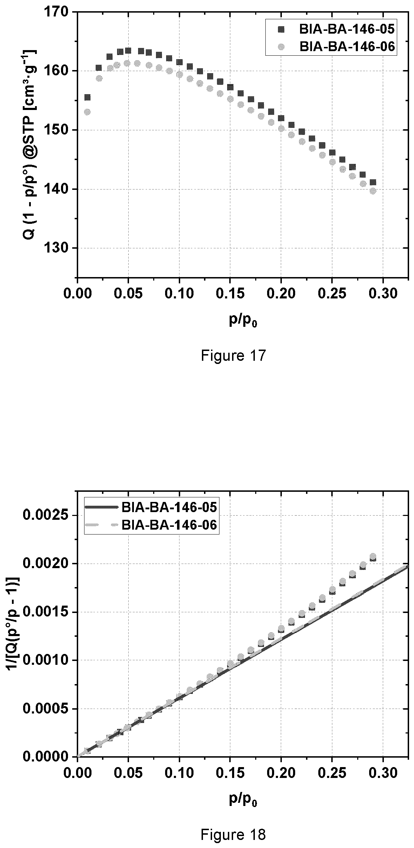

Figure 17: Rouquerol plot of samples BIA-BA-146-05 and 146-06.

Figure 18: BET plot of samples BIA-BA-146-05 and 146-06.

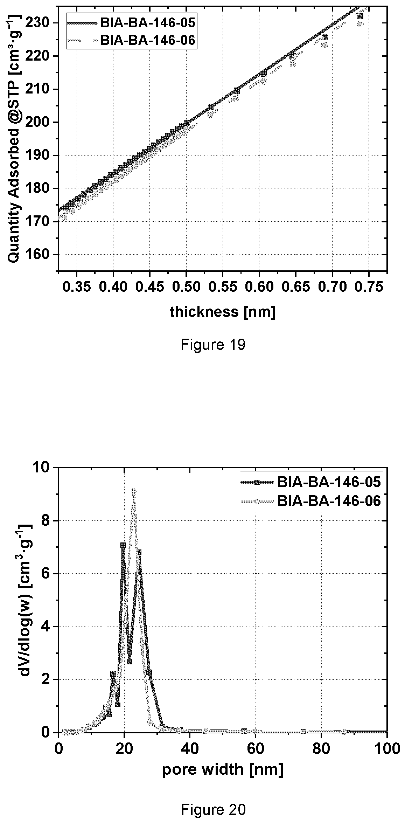

Figure 19: t-plot of samples BIA-BA-146-05 and 146-06.

Figure 20: BJH plot (desorption) of samples BIA-BA-146-05 and 146-06.

<u>Discussion of the Results</u>

<u>Example 1: Reproducibility</u>

As shown in Fig. 1, the $N_2$ sorption isotherm show a high alignment and same hysteresis type. The total pore volumes $V_{pore}$ of the samples listed in table 1 are matching within the limit of the measurement error of 5%.

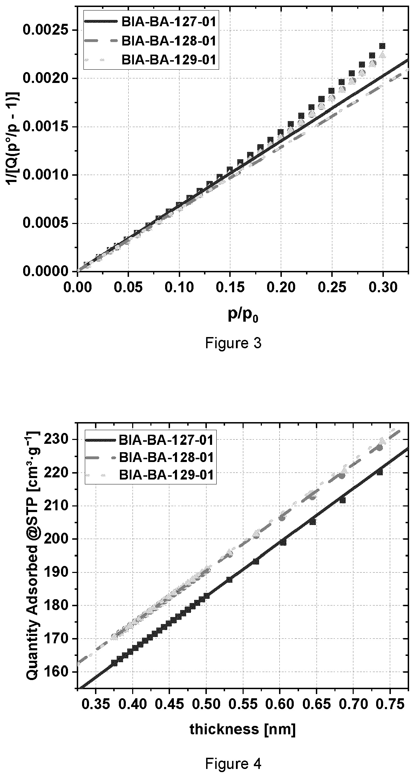

The evaluation of the BTE surface area was performed under the Rouquerol criteria. The corresponding Rouquerol-plots in Figure 2 are indicating that the data range for the BET analysis is the same for each sample. The values of the specific surface area $S_{BET}$ resulting from the BET fits in Figure 3 are aligning within an error of 2.7%.

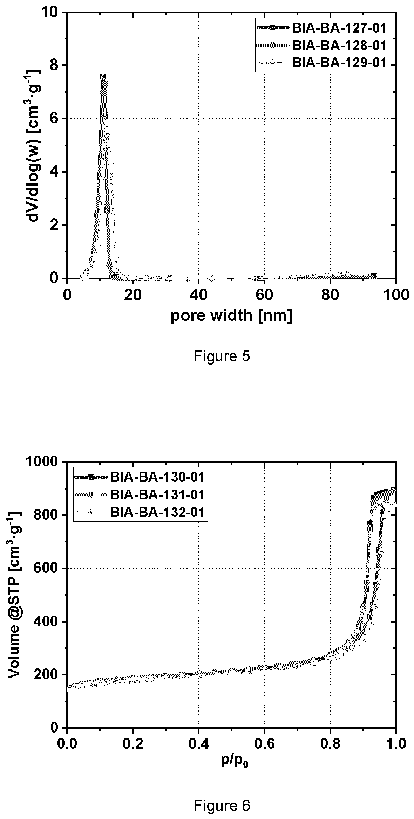

The values of the specific external surface area $S_{Ext}$ resulting from the t-plot fits in Figure 4 are matching within an error of 1.6%. The values of the mode pore width $d_{pore,mode}$ resulting from the BJH plot in Figure 5 are matching within an error of 3.5%.

$N_2$ sorption analysis showed that the samples which were produced under the same conditions and synthesis parameters show similar porous properties. From this it can be deduced that the synthesis is highly reproducible and porous carbon xerogels can be obtained within 260 min.

Table 1: $N_2$ sorption analysis of Example 1.

| Sample | $V_{pore}$ [cm³·g⁻¹] | | $S_{BET}$ [m²·g⁻¹] | | $S_{ext}$ [m²·g⁻¹] | | $d_{pore\ mode}$ [nm] | |
|---|---|---|---|---|---|---|---|---|
| BIA-BA-127-01 | 0.906 | | 646 | 666±18 | 252 | | 10.95 | |
| BIA-BA-128-01 | 0.926 | 0.945±0.046 | 677 | | 248 | 252±4 | 11.61 | 11.41±0.40 |
| BIA-BA-129-01 | 0.994 | | 676 | | 256 | | 11.67 | |

Example 2: Reproducibility

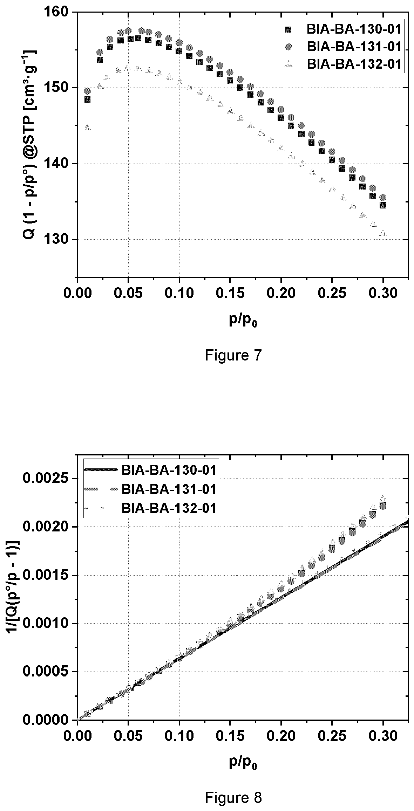

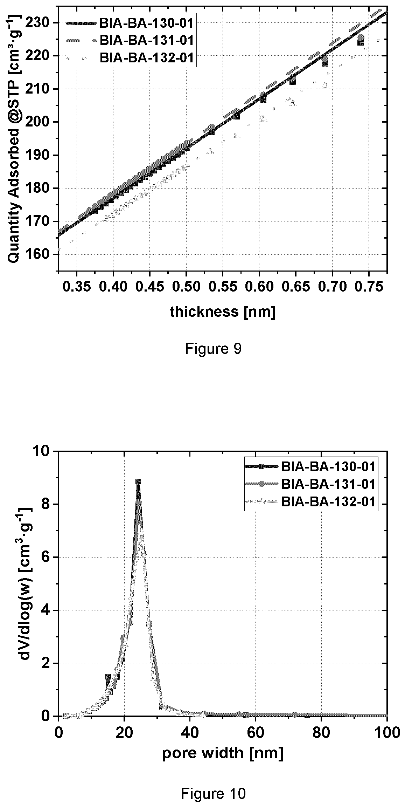

The $N_2$ sorption isotherm in Figure 6 show a high alignment and same hysteresis type. The total pore volumes $V_{pore}$ of the samples listed in table 1 are matching within the limit of the measurement error of 5%.
The evaluation of the BTE surface area was performed under the Rouquerol criteria. The corresponding Rouquerol-plots in Figure 7 are indicating that the data range for the BET analysis is the same for each sample. The values of the specific surface area $S_{BET}$ resulting from the BET fits in Figure 3 are aligning within an error of 1.8%.
The values of the specific external surface area $S_{Ext}$ resulting from the t-plot fits in Figure 8 are matching within an error of 2.6%. The values of the mode pore width $d_{pore,mode}$ resulting from the BJH plot in Figure 9 are matching within an error of 2.2%.
$N_2$ sorption analysis showed that the samples which were produced under the same conditions and synthesis parameters show similar porous properties. From this, it can be deduced that the synthesis is highly reproducible and porous carbon xerogels can be obtained within 260 min.

Table 2: $N_2$ sorption analysis of Example 2.

| Sample | $V_{pore}$ [cm³·g⁻¹] | | $S_{BET}$ [m²·g⁻¹] | | $S_{ext}$ [m²·g⁻¹] | | $d_{pore\ mode}$ [nm] | |
|---|---|---|---|---|---|---|---|---|
| BIA-BA-130-01 | 1.386 | | 689 | | 232 | | 24.28 | |
| BIA-BA-131-01 | 1.381 | 1.355±0.049 | 693 | 684±12 | 236 | 231±6 | 24.39 | 24.65±0.54 |
| BIA-BA-132-01 | 1.299 | | 671 | | 224 | | 25.27 | |

Example 3: Comparison Superfast vs. Conventional Drying

The $N_2$ sorption isotherm in Figure 11 show a high alignment and same hysteresis type. The total pore volumes $V_{pore}$ of the samples listed in table 1 are matching within the limit of the measurement error of 5%.
The evaluation of the BTE surface area was performed under the Rouquerol criteria. The corresponding Rouquerol-plots in Figure 12 are indicating that the data range for the BET analysis is the same for each sample. The values of the specific surface area $S_{BET}$ resulting from the BET fits in Figure 3 are aligning within an error of 1.7%. The values of the specific external surface area $S_{Ext}$ resulting from the t-plot fits in Figure 4 are matching within an error of 2.6%.
The values of the mode pore width $d_{pore,mode}$ resulting from the BJH plot in Figure 5 are matching within an error of 1.9%.
The RF gels were synthesised with the same parameters and conditions. Even though the one sample was dried under ambient conditions in a convection oven at 80°C for 24h before the carbonisation the other sample that was directly carbonised after the synthesis, both carbon xerogels show similar porous properties. From this, it can be deduced that the skipping of the drying step and directly carbonising the RF gels does not affect the porous properties.

Table 3: $N_2$ sorption analysis of Example 3.

| Sample | $V_{pore}$ [cm³·g⁻¹] | | $S_{BET}$ [m²·g⁻¹] | | $S_{ext}$ [m²·g⁻¹] | | $d_{pore\ mode}$ [nm] | |
|---|---|---|---|---|---|---|---|---|
| BIA-BA-146-01 | 1.464 | | 686 | | 225 | | 24.34 | |
| BIA-BA-146-03 | 1.459 | 1.462±0.004 | 703 | 695±12 | 233 | 229±6 | 23.70 | 24.02±0.45 |

Example 4: Comparison Superfast vs. Conventional Drying

The $N_2$ sorption isotherm in Figure 1 show a high alignment and same hysteresis type. The total pore volumes $V_{pore}$ of the samples listed in table 1 are matching within the limit of the measurement error of 5%.
The evaluation of the BTE surface area was performed under the Roqeuerol criteria. The corresponding Roquerol-plots in Figure 2 are indicating that the data range for the BET analysis is the same for each sample. The values of the specific surface area $S_{BET}$ resulting from the BET fits in Figure 3 are aligning within an error of 0.7%. The values of the specific external surface area $S_{Ext}$ resulting from the t-plot fits in Figure 4 are matching within an error of 0.4%. The values of the mode pore width $d_{pore,mode}$ resulting from the BJH plot in Figure 5 are matching within an error of 4.6%.

The RF gels were synthesised with the same parameters and conditions. Even though the one sample was dried under ambient conditions in a convection oven at 80°C for 24h before the carbonisation the other sample which was directly carbonised after the synthesis, both carbon xerogels show similar porous properties. From this it can be deduced that the skipping of the drying step and directly carbonising the RF gels does not affect the porous properties.

Table 4: $N_2$ sorption analysis of Example 4.

| Sample | $V_{pore}$ [cm$^3$·g$^{-1}$] | | $S_{BET}$ [m$^2$·g$^{-1}$] | | $S_{ext}$ [m$^2$·g$^{-1}$] | | $d_{pore\ mode}$ [nm] | |
|---|---|---|---|---|---|---|---|---|
| BIA-BA-146-05 | 1.332 | 1.327±0.008 | 718 | 715±5 | 232 | 232±1 | 22.90 | 23.67±1.08 |
| BIA-BA-146-06 | 1.321 | | 711 | | 233 | | 24.43 | |

Experimental Part

The carbon xerogels prepared according to the inventive method underwent a degassing process at 250 °C under vacuum for 12 hours before conducting $N_2$ sorption analyses at liquid nitrogen temperature. The sorption measurements were carried out using a Micrometrics 3Flex instrument. To analyze the data, the MicroActive Software provided by Micromeritics was used. The specific surface area ($S_{BET}$) was calculated using the Brunauer-Emmet-Teller (BET) theory, and the evaluation followed the Rouquerol criteria. For determining the micropore volume ($V_{mic}$) and specific external surface area ($S_{Ext}$), the t-plot method was employed, applying the Harkins and Jura equation to calculate the thickness of the adsorbed layer within the capillary pores. To analyze the pore width (mode) in the meso- and macropore range, the desorption branches of the isotherms were utilized with the Barret-Joyner-Halendar (BJH) method.

Synthesis

In this work, different sol-gel syntheses were investigated in which two main parameters were varied, namely the RC value (1) and M% (2). The RC value represents the molar ratio between resorcinol and the $Na_2CO_3$ catalyst and refers to as the pH variation already described in the introduction.

$$RC = \frac{n_{Resorcinol}}{n_{Na2CO3}} \qquad (1)$$

The second parameter, M%, is the mass fraction of the mass of resorcinol and formaldehyde to the overall mass of the reaction solution and is equivalent to the dilution parameter which is often used in literature.

$$M\% = \frac{m_{Resorcinol} + m_{Formaldehyde}}{m_{total}} \qquad (2)$$

General Synthesis of Carbon Xerogels

Resorcinol was dissolved in a 37 wt% formaldehyde solution in a molar ratio (R/F) of 1:2. After the resorcinol dissolved, an appropriate amount of water was added to achieve an M% of 30%. For the synthesis of carbon xerogels with different porous properties, different amounts of an 0.05 M aqueous solution of $Na_2CO_3$ were used until the desired RC value was obtained. The solutions were shortly stirred and then poured into Teflon liners, which were inserted into steel autoclaves. The autoclaves were placed in a heating element at 120 °C for 60 min. The solidified RF-gel was then put in a plastic bag and then crushed by hand. The coarse powder was then pulverized to a fine powder with a blade mill. The RF-gel powder was then placed in a quartz glass tube that was heated for 2 h at 1000 °C in a tube furnace for carbonisation with a heating rate of 10 K/min. The quartz glass tube was flushed continuously with $N_2$ to prevent oxidation of the material.

### Example 1: Reproducibility

#### 1.1 BIA-BA-127-01

19.412 g resorcinol and 28.235 g 37 wt% formaldehyde were mixed in a glass beaker until the resorcinol was dissolved. To the reaction solution, 45.301 g MQ water was added while stirring the solution. Then, 7.052 g 0.05 M $Na_2CO_3$-solution was added to the reaction solution. After 10 min stirring, the solution was poured into Teflon liners and enclosed in a steel autoclave, which then was placed in a heating element and heated to 120°C for 60 min. The solidified gel was taken out of the Teflon liners and was then put in a plastic bag and then crushed by hand. The coarse powder was then pulverized to a fine powder with a blade mill. The powder was then placed in a $SiO_2$-tube that was placed in a tube furnace for the carbonisation step. The tube was continuously flushed with $N_2$ to achieve inert atmosphere. The $SiO_2$-tube was then heated to 1000°C with a heating rate of 10 K/min and then held at this temperature 120 min.
Reaction Time: ca. 260 min

#### 1.2 BIA-BA-128-01

19.412 g resorcinol and 28.235 g 37 wt% formaldehyde were mixed in a glass beaker until the resorcinol was dissolved. To the reaction solution, 45.301 g MQ water was added while stirring the solution. Then, 7.052 g 0.05 M $Na_2CO_3$-solution was added to the reaction solution. After 10 min stirring, the solution was poured into Teflon liners and enclosed in a steel autoclave, which then was placed in a heating element and heated to 120°C for 60 min. The solidified gel was taken out of the Teflon liners and was then put in a plastic bag and then crushed by hand. The coarse powder was then pulverized to a fine powder with a blade mill. The powder was then placed in a SiOz-tube that was placed in a tube furnace for the carbonisation step. The tube was continuously flushed with $N_2$ to achieve inert atmosphere. The SiOz-tube was then heated to 1000°C with a heating rate of 10 K/min and then held at this temperature 120 min.
Reaction Time: ca. 260 min

#### 1.3 BIA-BA-129-01

19.412 g resorcinol and 28.235 g 37 wt% formaldehyde were mixed in a glass beaker until the resorcinol was dissolved. To the reaction solution, 45.301 g MQ water was added while stirring the solution. Then, 7.052 g 0.05 M $Na_2CO_3$-solution was added to the reaction solution. After 10 min stirring, the solution was poured into Teflon liners and enclosed in a steel autoclave, which then was placed in a heating element and heated to 120°C for 60 min. The solidified gel was taken out of the Teflon liners and was then put in a plastic bag and then crushed by hand. The coarse powder was then pulverized to a fine powder with a blade mill. The powder was then placed in a $SiO_2$-tube that was placed in a tube furnace for the carbonisation step. The tube was continuously flushed with $N_2$ to achieve inert atmosphere. The $SiO_2$-tube was then heated to 1000°C with a heating rate of 10 K/min and then held at this temperature 120 min.
Reaction Time: ca. 260 min

### Example 2: Reproducibility

#### 2.1 BIA-BA-130-01

19.412 g resorcinol and 28.235 g 37 wt% formaldehyde were mixed in a glass beaker until the resorcinol was dissolved. To the reaction solution, 47.652 MQ water was added while stirring the solution. Then, 4.701 g 0.05 M $Na_2CO_3$-solution was added to the reaction solution. After 10 min stirring, the solution was poured into Teflon liners and enclosed in a steel autoclave, which then was placed in a heating element and heated to 120°C for 60 min. The solidified gel was taken out of the Teflon liners and was then put in a plastic bag and then crushed by hand. The coarse powder was then pulverized to a fine powder with a blade mill. The powder was then placed in a $SiO_2$-tube that was placed in a tube furnace for the carbonisation step. The tube was continuously flushed with $N_2$ to achieve inert atmosphere. The $SiO_2$-tube was then heated to 1000°C with a heating rate of 10 K/min and then held at this temperature 120 min.
Reaction Time: ca. 260 min

#### 2.2 BIA-BA-131-01

19.412 g resorcinol and 28.235 g 37 wt% formaldehyde were mixed in a glass beaker until the resorcinol was dissolved. To the reaction solution, 47.652 MQ water was added while stirring the solution. Then, 4.701 g 0.05 M $Na_2CO_3$-solution was added to the reaction solution. After 10 min stirring, the solution was poured into Teflon liners and enclosed in a steel autoclave, which then was placed in a heating element and heated to 120°C for 60 min. The solidified gel was taken out of the Teflon liners and was then put in a plastic bag and then crushed by hand. The coarse powder was then pulverized to a fine powder with a blade mill. The powder was then placed in a SiOz-tube that was placed in a tube furnace for the carbonisation step. The tube was continuously flushed with $N_2$ to achieve inert atmosphere. The $SiO_2$-tube was then heated to 1000°C with a heating rate of 10 K/min and then held at this temperature 120 min.

Reaction Time: ca. 260 min

### 2.3 BIA-BA-132-01

19.412 g resorcinol and 28.235 g 37 wt% formaldehyde were mixed in a glass beaker until the resorcinol was dissolved. To the reaction solution, 47.652 MQ water was added while stirring the solution. Then, 4.701 g 0.05 M $Na_2CO_3$-solution was added to the reaction solution. After 10 min stirring, the solution was poured into Teflon liners and enclosed in a steel autoclave, which then was placed in a heating element and heated to 120°C for 60 min. The solidified gel was taken out of the Teflon liners and was then put in a plastic bag and then crushed by hand. The coarse powder was then pulverized to a fine powder with a blade mill. The powder was then placed in a $SiO_2$-tube that was placed in a tube furnace for the carbonisation step. The tube was continuously flushed with $N_2$ to achieve inert atmosphere. The $SiO_2$-tube was then heated to 1000°C with a heating rate of 10 K/min and then held at this temperature 120 min.
Reaction Time: ca. 260 min

### Example 3: Comparison Superfast vs. Conventional Drying

### 3.1 BIA-BA-146-01

12.132 g resorcinol and 17.886 g 37 wt% formaldehyde were mixed in a glass beaker until the resorcinol was dissolved. To the reaction solution, 29.543 MQ water was added while stirring the solution. Then, 2.938 g 0.05 M $Na_2CO_3$-solution was added to the reaction solution. After 10 min stirring, the solution was poured into Teflon liners and enclosed in a steel autoclave, which then was placed in a heating element and heated to 120°C for 60 min. The solidified gel was taken out of the Teflon liners and was then put in a plastic bag and then crushed by hand. The coarse powder was then pulverized to a fine powder with a blade mill. The powder was then placed in a SiOz-tube that was placed in a tube furnace for the carbonisation step. The tube was continuously flushed with $N_2$ to achieve inert atmosphere. The SiOz-tube was then heated to 1000°C with a heating rate of 10 K/min and then held at this temperature 120 min.
Reaction Time: ca. 260 min

### 3.2 BIA-BA-146-03

12.132 g resorcinol and 17.886 g 37 wt% formaldehyde were mixed in a glass beaker until the resorcinol was dissolved. To the reaction solution, 29.543 MQ water was added while stirring the solution. Then, 2.938 g 0.05 M $Na_2CO_3$-solution was added to the reaction solution. After 10 min stirring, the solution was poured into Teflon liners and enclosed in a steel autoclave, which then was placed in a heating element and heated to 120°C for 60 min. The solidified gel was taken out of the Teflon liners and was then put in a plastic bag and then crushed by hand. The coarse powder was then pulverized to a fine powder with a blade mill. The wet gel was dried in a convection oven at 80°C for 24 h. The powder was then placed in a $SiO_2$-tube that was placed in a tube furnace for the carbonisation step. The tube was continuously flushed with $N_2$ to achieve inert atmosphere.
The $SiO_2$-tube was then heated to 1000°C with a heating rate of 10 K/min and then held at this temperature 120 min.
Reaction Time: ca. 1700 min

### Example 4: Comparison Superfast vs. Conventional Drying

### 4.1 BIA-BA-146-05

12.132 g resorcinol and 17.886 g 37 wt% formaldehyde were mixed in a glass beaker until the resorcinol was dissolved. To the reaction solution, 29.543 MQ water was added while stirring the solution. Then, 2.938 g 0.05 M $Na_2CO_3$-solution was added to the reaction solution. After 10 min stirring the solution was poured into glass vials, closed airtight and then placed in a oven at 80°C for 24 h. The solidified gel was taken out of the glass vials and was then put in a plastic bag and then crushed by hand. The coarse powder was then pulverized to a fine powder with a blade mill. The wet gel was dried in a convection oven at 80°C for 24 h. The powder was then placed in a $SiO_2$-tube that was placed in a tube furnace for the carbonisation step. The tube was continuously flushed with $N_2$ to achieve inert atmosphere. The $SiO_2$-tube was then heated to 1000°C with a heating rate of 10 K/min and then held at this temperature 120 min.

Reaction Time: ca. 3140 min

4.2 BIA-BA-146-06

12.132 g resorcinol and 17.886 g 37 wt% formaldehyde were mixed in a glass beaker until the resorcinol was dissolved. To the reaction solution, 29.543 MQ water was added while stirring the solution. Then, 2.938 g 0.05 M $Na_2CO_3$-solution was added to the reaction solution. After 10 min stirring the solution was poured into glass vials, closed airtight and then placed in a oven at 80°C for 24 h. The solidified gel was taken out of the glass vials and was then put in a plastic bag and then crushed by hand. The coarse powder was then pulverized to a fine powder with a blade mill. The powder was then placed in a SiOz-tube that was placed in a tube furnace for the carbonisation step. The tube was continuously flushed with $N_2$ to achieve inert atmosphere. The $SiO_2$-tube was then heated to 1000°C with a heating rate of 10 K/min and then held at this temperature 120 min.
Reaction Time: ca. 1700 min
As shown above, the inventors have provided a simplified process for a fast and efficient synthesis of a carbon xerogel which allows a more cost-effective production thereof and opens the options for a more wide use of said xerogels for electrochemical purposes.

**Claims**

1. Process for the preparing a carbon xerogel, said process comprising the steps of:

   a) mixing a nucleophilic compound, selected from melamin, melam, melem, ammeline, 4,6-amino-dihydroxy-1,3,5-triazine, aminophenol, diaminobenzene, preferably a mono- or polyhydroxy benzene and any combination thereof, and formaldehyde or an oligomer thereof in a molar ratio of 0.1 to 1, preferably of 1 : (1.5 to 2.5), more preferably of 1 : (1.8 to 2.2) in a solvent, being selected from water, a polar organic solvent, preferably a $C_1$- to $C_3$- aliphatic alcohol, or a mixture thereof in the presence of a catalyst which may be an acidic or basic catalyst in a mass fraction of the mass of the nucleophilic compound and formaldehyde to the overall mass of the reaction solution in the range of 1 to 60 % b.w., preferably in the range of 20 to 50% b.w.,
   b) heating the mixture obtained in step a) in a sealed container to a temperature in the range of 50°C to 250°C, preferably 80°C to 160°C for a period of time in the range of 30 minutes to 24 hours whereby a stable gel is formed,
   c) heating the gel obtained in step b) for direct carbonisation to a temperature range of 500°C to 3000°C in an oxygen-free atmosphere with a heating rate of 0.1 to 100 °K/min, preferably 5 to 10 °K/min, keeping the gel in said temperature range and atmosphere for a period of time in the range of 10 minutes to 2 hours, and
   d) bringing the product obtained in step c) to ambient temperature.

2. The process according to claim 1 wherein a nonpolar organic solvent is added to the solvent in step a) and the obtained mixture is stirred for forming an emulsion.

3. The process according to claim 1 or 2 wherein the sealed container in step b) is an autoclave which is optionally pressurized to 1 to 100 bar.

4. The process according to any one of claim 1 to 3, wherein the gel obtained in step b) is crushed to a particulate gel before step c)

5. The process according to any one of claim 1 to 4, wherein the gel obtained in step b) is directly transferred to a carbonization vessel without any further pre-treatment such as drying and/or solvent exchange.

6. The process according to any one of the preceding claims, wherein said oxygen-free atmosphere in step c) nitrogen gas, argon gas, ammonia gas, or a mixture thereof.

7. The process according to any one of the preceding claims, wherein the polyhydroxy benzene is a dihydroxy benzene.

8. The process according to claim 7, wherein said dihydroxy benzene is selected from the group consisting of resorcinol, catechol, substituted resorcinol, substituted catechol and mixtures thereof.

9. The process according to claim 8, wherein said dihydroxy benzene is resorcinol.

10. The process of claim 8, wherein said dihydroxy benzene is a mixture of resorcinol and catechol.

11. The process according to any one of the preceding claims, wherein the molar ratio of said mono- or polyhydroxy benzene to said formaldehyde is about 1:2.

12. The process according to any one of the preceding claims, wherein the polyhydroxy benzene to catalyst ratio is in the range of 0.1 and 100.000.

13. The process according to any one of the preceding claims, wherein said catalyst is sodium carbonate.

14. The process according to any one of the preceding claims, wherein said oxygen-free atmosphere is a nitrogen atmosphere.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

| | EUROPEAN SEARCH REPORT | Application Number |
|---|---|---|
| | | EP 23 18 1832 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kong F M ET AL: "Low-Density Carbonized Resorcinol-Formaldehyde Foams Final Report", DOE; USDOE, Washington, DC (United States), 4 July 1991 (1991-07-04), XP093109490, DOI: 10.2172/6108157 Retrieved from the Internet: URL:chrome-extension://efaidnbmnnnibpcajpc glclefindmkaj/https://www.osti.gov/servlet s/purl/6108157 [retrieved on 2023-12-06] | 1-9, 11-14 | INV. C01B32/05 B01J13/00 C04B35/524 C08G8/20 C08G8/22 C08G12/06 |
| Y | * abstract * * page 3, paragraph Chapter II * * pages 31,32, paragraph CHapter VII * * table 10 * * paragraph [ChapterIV]; figure 4 * | 10 | |
| X | KR 101 232 380 B1 (KORE INST MACH & AMP MATERIALS [KR]) 12 February 2013 (2013-02-12) | 1,5-9,12 | |
| Y | * abstract * * example 3 * * paragraphs [0056] - [0058], [0062] * | 10 | TECHNICAL FIELDS SEARCHED (IPC) C01B C09J B01J C04B C08G |
| X | LI M ET AL: "Correspondence", CARBON, ELSEVIER OXFORD, GB, vol. 37, no. 10, 1 January 1999 (1999-01-01), pages 1645-1647, XP004179431, ISSN: 0008-6223, DOI: 10.1016/S0008-6223(99)00163-3 * abstract * * page 1646, left-hand column * | 1,5-9, 11,12,14 | |

-/--

The present search report has been drawn up for all claims

| Place of search | Date of completion of the search | Examiner |
|---|---|---|
| The Hague | 6 December 2023 | Mertins, Frédéric |

EPO FORM 1503 03.82 (P04C01)

Europäisches
Patentamt
European
Patent Office
Office européen
des brevets

# EUROPEAN SEARCH REPORT

Application Number

EP 23 18 1832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 104 030 268 B (UNIV BEIJING FORESTRY) 30 September 2015 (2015-09-30) * abstract * * paragraph [0002] * * examples 1-3 * ----- | 10 | |

TECHNICAL FIELDS
SEARCHED       (IPC)

The present search report has been drawn up for all claims

| Place of search | Date of completion of the search | Examiner |
|---|---|---|
| The Hague | 6 December 2023 | Mertins, Frédéric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 1832

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2023

| Patent document cited in search report | Publication date | Patent family member(s) | Publication date |
|---|---|---|---|
| KR 101232380 B1 | 12-02-2013 | NONE | |
| CN 104030268 B | 30-09-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012020869 A1
- CN 113860284 A
- US 4873218 A

**Non-patent literature cited in the description**

- **PEKALA et al.** *Journal of Materials Science*, 1989, vol. 24 (9), 3221-3227
- **REY-RAAP et al.** *Microporous and Mesoporous Materials*, 2014, vol. 195, 266-275
- **SCHERDEL et al.** *Journal of Porous Materials*, 2012, vol. 19 (3), 351-360
- **SZCZUREK et al.** *Carbon*, 2011, vol. 49 (8), 2773-2784
- **GRISHECHKO et al.** *Microporous and Mesoporous Materials*, 2013, vol. 168, 19-29
- **WIENER et al.** *Journal of Non-Crystalline Solids*, 2004, vol. 350, 126-130
- **CHO et al.** *RSC Advances*, 2018, vol. 8 (38), 21326-21331
- **LIN et al.** *Carbon*, 1997, vol. 35 (9), 1271-1278
- **LÉONARD et al.** *Carbon*, 2005, vol. 43 (8), 1808-1811
- **JOB et al.** *Journal of Non-Crystalline Solids*, 2006, vol. 352 (1), 24-34
- **CALVO et al.** *Journal of Colloid and Interface Science*, 2011, vol. 357 (2), 541-547